(19) Europäisches Patentamt
European Patent Office
Office européen des brevets

(11) EP 2 690 123 B1

(12) **EUROPEAN PATENT SPECIFICATION**

(45) Date of publication and mention of the grant of the patent:
**01.03.2017 Bulletin 2017/09**

(21) Application number: **12765057.0**

(22) Date of filing: **26.03.2012**

(51) Int Cl.:
***C08G 73/10*** (2006.01) ***H01M 4/139*** (2010.01)
***H01M 4/62*** (2006.01)

(86) International application number:
**PCT/JP2012/002092**

(87) International publication number:
**WO 2012/132396 (04.10.2012 Gazette 2012/40)**

(54) **POLYIMIDE PRECURSOR SOLUTION, POLYIMIDE PRECURSOR, POLYIMIDE RESIN, MIXTURE SLURRY, ELECTRODE, MIXTURE SLURRY PRODUCTION METHOD, AND ELECTRODE FORMATION METHOD**

POLYIMIDVORLÄUFERLÖSUNG, POLYIMIDVORLÄUFER, POLYIMIDHARZ, SCHLAMMMISCHUNG, ELEKTRODE, VERFAHREN ZUR HERSTELLUNG DER SCHLAMMMISCHUNG UND ELEKTRODENBILDUNGSVERFAHREN

SOLUTION PRÉCURSEUR DE POLYIMIDE, PRÉCURSEUR DE POLYIMIDE, RÉSINE POLYIMIDE, SUSPENSION ÉPAISSE MIXTE, ÉLECTRODE, PROCÉDÉ DE PRODUCTION DE LA SUSPENSION ÉPAISSE MIXTE, ET PROCÉDÉ DE FORMATION D'UNE ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2011 JP 2011068608**
**25.03.2011 JP 2011068595**

(43) Date of publication of application:
**29.01.2014 Bulletin 2014/05**

(73) Proprietors:
- **I.S.T. Corporation**
**Otsu-shi, Shiga 520-2153 (JP)**
- **National Institute of Advanced Industrial Science and Technology**
**Tokyo 100-0013 (JP)**

(72) Inventors:
- **YAMADA, Hiroshi**
**Otsu-shi**
**Shiga 520-2153 (JP)**
- **SAWA, Kazuki**
**Otsu-shi**
**Shiga 520-2153 (JP)**
- **NIMURA, Yoshihito**
**Otsu-shi**
**Shiga**
**5202153 (JP)**
- **EDA, Yuusuke**
**Ikeda-shi**
**Osaka**
**5630026 (JP)**
- **OKUYAMA, Yasue**
**Ikeda-shi**
**Osaka**
**5630026 (JP)**
- **MIYUKI, Takuhiro**
**Ikeda-shi**
**Osaka**
**5630026 (JP)**
- **SAKAI, Tetsuo**
**Ikeda-shi**
**Osaka 563-0026 (JP)**

(74) Representative: **Horn Kleimann Waitzhofer Patentanwälte PartG mbB**
**Ganghoferstrasse 29a**
**80339 München (DE)**

(56) References cited:
**JP-A- 59 204 609**
**JP-A- 2000 273 172**
**JP-A- 2000 281 671**
**JP-A- 2001 174 996**
**US-A1- 2008 124 631**
**JP-A- 2000 273 172**
**JP-A- 2000 281 671**
**JP-A- 2001 174 996**
**JP-A- 2006 198 589**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- HÜSEYIN DELIGÖZ ET AL: "Preparation of sulfonated copolyimides containing aliphatic linkages as proton-exchange membranes for fuel cell applications", JOURNAL OF APPLIED POLYMER SCIENCE, vol. 110, no. 2, 15 October 2008 (2008-10-15), pages 1216-1224, XP055144197, ISSN: 0021-8995, DOI: 10.1002/app.28561
- PAK Y S ET AL: "Ionic transport measurements of LiCF3SO3 doped polyimide-diaminobenzenesulfonic acid copolymer", SOLID STATE IONICS, NORTH HOLLAND PUB. COMPANY. AMSTERDAM; NL, NL, vol. 67, no. 1-2, 1 December 1993 (1993-12-01), pages 165-169, XP025754120, ISSN: 0167-2738, DOI: 10.1016/0167-2738(93)90322-T [retrieved on 1993-12-01]
- TAKAYUKI UEMURA ET AL: "Characterization of Positive-type Photosensitive Polyimide Films Formed by Electrodeposition Coating", JOURNAL OF PHOTOPOLYMER SCIENCE AND TECHNOLOGY, vol. 16, no. 2, 1 January 2003 (2003-01-01), pages 279-284, XP055144208, ISSN: 0914-9244, DOI: 10.2494/photopolymer.16.279
- TAKEYUKI UEMURA ET AL: "Characterization of Positive-type Photosensitive Polyimide Films Formed by Electrodeposition Coating", JOURNAL OF PHOTOPOLYMER SCIENCE AND TECHNOLOGY, vol. 17, no. 2, 1 January 2004 (2004-01-01), pages 269-280, XP055144206, ISSN: 0914-9244, DOI: 10.2494/photopolymer.17.269

## Description

TECHNICAL FIELD

The present invention relates to polyimide precursor solutions and polyimide precursors. In addition, the present invention relates to polyimide resins obtained from polyimide precursor solutions or polyimide precursors. Furthermore, the present invention relates to mixture slurries that contains active substance particles in a polyimide precursor solution, particularly mixture slurries for use in forming an anode. Additionally, the present invention relates to methods for producing these mixture slurries. In addition, the present invention relates to electrodes (anodes) obtained from these mixture slurries. Furthermore, the present invention relates to methods for forming these electrodes.

BACKGROUND ART

In the past, "the use of a monomeric polyimide precursor as a binder added to the anode mixture slurry that forms the anode for lithium ion secondary batteries and the like" was proposed (for example, see: Japanese published unexamined patent application no. 2008-034352, etc.). This monomeric polyimide precursor comprises mainly a tetracarboxylic acid ester compound and a diamine compound that, for example, upon heating forms a porous structure by undergoing high-molecular-weight polymerization via imidization. By undergoing high-molecular-weight polymerization, the monomeric polyimide precursor becomes firmly bound to the active substance particles and current collector body, and adding this monomeric polyimide precursor to an anode mixture slurry can adequately prevent the loosening and detachment of the active substance layer from the anode current collector body due to expansion and contraction of the active substance particles. Furthermore, by forming a porous structure, a solid template (mold) is formed that encloses the active substance, and when the active substance particles bind strongly in the boreholes, the porous structure is maintained without collapse even after repeated intense expansion and contraction by the active substance particles, and consequently it is possible for the charge/discharge cycle in lithium ion secondary batteries to be increased dramatically.

JP 59 204609 A_discloses a polyamide-imide based resin composition characterized by adding (A) 5 to 70 parts by weight of phenol-based-compound-stabilized polyisocyanate to 100 parts by weight of a resin of a resin composition obtained by compounding together (B) a resin of a polyimide resin solution and (C) a resin solution. The parts by weight of (A) to be added have been converted into the ones of polyisocyanate alone. (A) is represented by the general formula

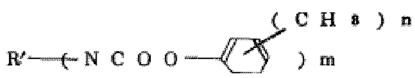

(where R' indicates an aromatic polyisocyanate residue, n is an integer of 0 to 2, and m is an integer of 1 to 4 as will be applied to the rest of this application). (B) is obtained by heating and allowing substantially equal moles of (a) an aromatic tetracarboxylic acid (including an anhydride and lower alkyl ester thereof as will be applied to the rest of this application and) containing at least 30 mol% of 3,3',4,4'-benzophenone tetracarboxylic acid (including an anhydride and lower alkyl ester thereof) and (b) diamine, including 30 to 60 mol% of one, two or more types of aromatic diamines represented by the general formula

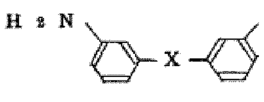 ..... ( I ) or 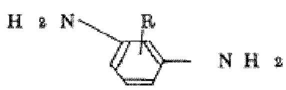 ..... ( II )

(where X is selected from the group consisting of CH2, O, SO2, C(CH8)2 and S and R is selected from the group consisting of a lower alkyl group, a lower alkoxyl group, a COOH group, an OH group, an SO8H group and halogens as will be applied to the rest of this application) to react with each other in a phenol-based solvent. (C) is obtained by allowing substantially equal moles of (c) an aromatic tricarboxylic acid anhydride including at least 5 mol% of citric acid anhydride and (d) an aromatic diisocyanate to react with each other in a phenol-based solvent.

Journal of Applied Polymer Science, vol. 110, pages 1216-1224 discloses a series of random sulfonated copolyimides containing aliphatic linkages (co-SPIAs) with controlled degrees of sulfonic acid groups were synthesized via a conventional two-step polyimidization method. 2,4-Diaminobenzene sulfonic acid (2,4-DABS) and 1,6-diaminohexane (DAH) were used as sulfonated aromatic diamine and nonsulfonated aliphatic diamine compounds, respectively. Mixtures of diamine compounds were reacted with benzophenonetetracarboxylic dianhydride (BTDA) to obtain the co-SPIAs. The molar ratios of DAH/2,4-DABS were systematically varied to produce copolymers with controlled compositions that contained up to 70 mol % sulfonic acid moieties. The co-SPIAs were evaluated for thermal oxidative stability, ion-exchange capacity (IEC), water uptake, proton conductivity, solubility, and hydrolytic stability. The proton conductivity and hydrolytic stability of the co-SPIAs were compared with the fully aromatic polyimide, sulfonated homo-polyimide (homo-SPI) (BTDA/2,4-DABS). From thermogravimetric analysis, we observed desulfonation temperatures in the range 200-350°C, which suggested a high stability of the sulfonic acid groups. The co-SPIAs with 40-70 mol % 2,4-DABS showed higher proton conductivity than Nafion 117 in water. The proton conductivity values of the co-SPIAs were mainly a function of IEC and water uptake. Furthermore, the hydrolytic stability of the 2,4-DABS-based sulfonated polyimide membranes were improved by the introduction of the nonsulfonated diamine with aliphatic linkages. The optimum concentration of 2,4-DABS was found to be around 40 mol % from the viewpoint of proton conductivity, IEC, and hydrolytic stability.

Solid State Ionics, vol. 67, pages 165-169, discloses that in an effort to develop polymer electrolytes suitable for high temperature electrochemical operation, a polymer electrolyte based on the lithium salt doped copolymer of 1, 2, 4, 5-benzenetetracarboxylic dianhydrite (PMDA), 4-aminophenyl ether (ODA), 2, 5-diaminobenzene sulfonic acid (DABSA) has been prepared. As $LiCF_3SO_3$ showed the best conductivity results within the lithium compounds, it was selected as our primary dopant. Infrared spectroscopy and electrical conductivity measurements have been performed to study film form of the copolymers. The ionic transport was found to exhibit an Arrhenius behavior over the temperature range of 160-300°C, and the ionic conduction in these systems was found to be mainly due to the presence of lithium ions, which can be introduced into both oxygen and $SO_3^-$ sites via doping but only into $SO_3^-$ sites through ion-exchange.

Journal of photopolymer science and technology, vol. 16, pages 279-284 discloses that soluble polyimides having pendant carboxyl groups were prepared by one-pot polycondensation of 6FDA with DABz and m-BAPS in the presence of gamma-valerolacetone/pyridine catalyst system in NMP/toluene mixture. Polyimide compositions for electrodeposition coating consisted of the pendant carboxyl-containing polyimide, NMP and cyclohexanone as solvents, N-methylmorpholine as a neutralizing agent, deionized water and PC-5 as a photosensitive material. The electrodeposition coating under a fixed voltage provided photosensitive polyimide films with high levels of appearance and smoothness on a copper foil. The resulting photosensitive polyimide films gave positive-tone behavior by UV irradiation, followed by development in aqueous TMAH or ethanolamine-containing solution. The scanning electron microscopic photograph of the resulting image showed fine and sharp L/S space patterns with 10 micrometers resolution.

Journal of photopolymer science and technology, vol. 17, pages 269-280 discloses that soluble polyimides having pendant carboxyl groups were prepared by one-pot polycondensation of 4,4'-(hexafluoroisopropylidene)diphthalic anhydride (6FDA) with 3,5-diaminobenzoic acid (DABz) and bis[4-(3-aminophenoxy)phenyl]-sulfone (m-BAPS) in the presence of γ-valerolactone/pyridine catalyst system using N-methyl-2-pyrrolidone (NMP)/toluene mixture as a solvent, and used for the electrodeposition coating. Positive-type photosensitive polyimide compositions for electrodeposition coating consisted of the pendant carboxyl-containing polyimide, NMP and cyclohexanone as solvents, N-methylmorpholine as a neutralizing agent, deionized water and diazonaphthoquinone(DNQ) compound(PC-5®) as a photosensitive material. The electrodeposition coating under a fixed voltage provided photosensitive polyimide films with high levels of appearance and smoothness on a copper foil. These photosensitive polyimide films formed by electrodeposition coating gave positive-tone behavior by UV irradiation and following development in an aqueous tetramethylammonium hydroxide(TMAH) or ethanolamine-containing solution. The scanning electron microscopic photographs of the resulting images showed fine and sharp line/space patterns.

Prior art literature

PATENT LITERATURE

Patent Document 1: Japanese published unexamined patent application no. 2008-034352

SUMMARY OF THE INVENTION

PROBLEM TO BE SOLVED BY THE INVENTION

The problem to be solved in the present invention is to provide a polyimide precursor and a monomeric polyimide precursor solution that can bind the active substance particles and the current collector body more strongly, and a mixture slurry for producing a battery electrode that can further increase the charge/discharge cycle in lithium ion secondary batteries and the like.

MEANS TO SOLVE THE PROBLEM

A monomeric polyimide precursor solution relating to a first aspect of the present invention contains a tetracarboxylic acid ester compound, a diamine compound having anionic groups, and a solvent. The tetracarboxylic acid ester compound and the diamino compound are dissolved in this solvent.

The tetracarboxylic acid ester compound is preferably an aromatic tetracarboxylic acid ester compound. Moreover, the tetracarboxylic acid ester compound is preferably an aromatic tetracarboxylic acid diester compound.

The tetracarboxylic acid ester compound can be obtained extremely simply via esterification of the corresponding tetracarboxylic acid dianhydride in alcohol. Furthermore, the esterification of the tetracarboxylic acid dianhydride is preferably carried out at a temperature of 50 °C or above and 150 °C or below.

Examples of tetracarboxylic acid dianhydrides that can form tetracarboxylic acid ester compound include aromatic tetracarboxylic acid dianhydrides such as pyromellitic acid dianhydride (PMDA), 1,2,5,6-naphthalenetetracarboxylic acid dianhydride, 1,4,5,8-naphthalenetetracarboxylic acid dianhydride, 2,3,6,7-naphthalenetetracarboxylic acid dianhydride, 2,2',3,3'-biphenyltetracarboxylic acid dianhydride, 2,3,3',4'-biphenyltetracarboxylic acid dianhydride, 3,3',4,4'-biphenyltetracarboxylic acid dianhydride (BPDA), 2,2',3,3'-benzophenonetetracarboxylic acid dianhydride, 2,3,3',4'-benzophenonetetracarboxylic acid dianhydride, 3,3',4,4'-benzophenonetetracarboxylic acid dianhydride (BTDA), bis-(3,4-dicarboxyphenyl)sulfone dianhydride, bis-(2,3-dicarboxyphenyl)methane dianhydride, bis-(3,4-dicarboxyphenyl)methane dianhydride, 1,1-bis-(2,3-dicarboxyphenyl)ethane dianhydride, 1,1-bis-(3,4-dicarboxyphenyl)ethane dianhydride, 2,2-bis-[3,4-(dicarboxyphenoxy)phenyl]propane dianhydride (BPADA), 4,4'-(hexafluoroisopropylidene)diphthalic dianhydride, oxydiphthalic anhydride (ODPA), bis-(3,4-dicarboxyphenyl)sulfone dianhydride, bis-(3,4-dicarboxyphenyl)sulfoxide dianhydride, thiodiphthalic anhydride, 3,4,9,10-perylenetetracarboxylic acid dianhydride, 2,3,6,7-anthracenetetracarboxylic acid dianhydride, 1,2,7,8-phenanthrenetetracarboxylic acid dianhydride, 9,9-bis-(3,4-dicarboxyphenyl)fluorene dianhydride, 9,9-bis-[4-(3,4'-dicarboxyphenoxy)phenyl]fluorene dianhydride, and the like, and alicyclic tetracarboxylic acid dianhydride compounds such as cyclobutanetetracarboxylic acid dianhydride, 1,2,3,4-cyclopentanetetracarboxylic acid dianhydride, 2,3,4,5-tetrahydrofurantetracarboxylic acid dianhydride, 1,2,4,5-cyclohexanetetracarboxylic acid dianhydride, 3,4-dicarboxy-1-cyclohexylsuccinic acid dianhydride, 3,4-dicarboxy-1,2,3,4-tetrahydro-1-naphthalenesuccinic acid dianhydride, and the like. Furthermore, such tetracarboxylic acid dianhydrides can be used singly or in mixtures.

Additionally, examples of alcohols that can form tetracarboxylic acid ester compound include methanol, ethanol, 1-propanol, 2-propanol, 1-butanol, 2-butanol, 2-methyl-1-propanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, 2,2-dimethyl-1-propanol, 1-hexanol, 2-methyl-1-pentanol, 4-methyl-2-pentanol, 2-ethyl-1-butanol, cyclohexanol, 2-methoxyethanol, 2-ethoxyethanol, 2-(methoxymethoxy)ethanol, 2-(isopropoxy)ethanol, 2-butoxyethanol, phenol, 1-hydroxy-2-propanone, 4-hydroxy-2-butanone, 3-hydroxy-2-butanone, 1-hydroxy-2-butanone, 2-phenylethanol, 1-phenyl-1-hydroxyethane, 2-phenoxyethanol, and the like; furthermore, polyvalent alcohols such as ethane-1,2-diol, propane-1,2-diol, propane-1,3-diol, butane-1,3-diol, butane-1,4-diol, butane-2,3-diol, pentane-1,5-diol, 2-methylpentane-2,4-diol, glycerol, 2-ethyl-2-(hydroxymethyl)propane-1,3-diol, hexane-1,2,6-triol, 2,2'-dihydroxydiethyl ether, 2-(2-methoxyethoxy)ethanol, 2-(2-ethoxyethoxy)ethanol, 3,6-dioxaoctane-1,8-diol, 1-methoxy-2-propanol, 1-ethoxy-2-propanol, dipropylene glycol, and the like. Furthermore, such alcohols can be used singly or in mixtures.

Furthermore, tetracarboxylic acid ester compounds can be constructed by other methods, for example, by direct esterification of tetracarboxylic acids.

Furthermore, among the tetracarboxylic acid ester compounds for the monomeric polyimide precursor solution relating to a first aspect of the present invention, 3,3',4,4'-benzophenonetetracarboxylic acid diester is particularly preferred.

In addition, the diamino compound is preferably an aromatic diamino compound. Moreover, examples of anionic functional groups include carboxyl groups, sulfate ester groups, sulfonic acid groups, phosphoric acid groups, phosphate ester groups, and the like. Furthermore, among such anionic functional groups the carboxyl group is particularly preferred. Examples of such diamino compounds include 3,4-diaminobenzoic acid, 3,5-diaminobenzoic acid, meta-phenylenediamine-4-sulfonic acid, and the like.

Furthermore, within the range that does not compromise the scope of the present invention, the monomeric polyimide precursor solution relating to the present aspect can include diamine compounds that do not have anionic groups.

Examples of diamine compounds that do not have anionic groups include para-phenylene diamine (PPD), meta-phenylene diamine (MPDA), 2,5-diaminotoluene, 2,6-diaminotoluene, 4,4'-diaminobiphenyl, 3,3'-dimethyl-4,4'-diaminobiphenyl, 3,3'-dimethoxy-4,4'-diaminobiphenyl, 2,2'-bis(trifluoromethyl)-4,4'-diaminobiphenyl, 3,3'-diaminodiphenylmethane, 4,4'-diaminodiphenylmethane (MDA), 2,2-bis-(4-aminophenyl)propane, 3,3'-diaminodiphenylsulfone (33DDS), 4,4'-diaminodiphenylsulfone (44DDS), 3,3'-diaminodiphenylsulfide, 4,4'-diaminodiphenylsulfide, 3,3'-diaminodiphenyl ether, 3,4'-diaminodiphenyl ether (34ODA), 4,4'-diaminodiphenyl ether (ODA), 1,5-diaminonaphthalene, 4,4'-diaminodiphenyldiethylsilane, 4,4'-diaminodiphenylsilane, 4,4'-diaminodiphenylethylphosphine oxide, 1,3-bis-(3-aminophenoxy)benzene (133APB), 1,3-bis-(4-aminophenoxy)benzene (134APB), 1,4-bis-(4-aminophenoxy)benzene, bis-[4-(3-aminophenoxy)phenyl]sulfone (BAPSM), bis-[4-(4-aminophenoxy)phenyl]sulfone (BAPS), 2,2-bis-[4-(4-aminophenoxy)phenyl]propane (BAPP), 2,2-bis-(3-aminophenyl)-1,1,1,3,3,3-hexafluoropropane, 2,2-bis-(4-aminophenyl)-1,1,1,3,3,3-hexafluoropropane, 9,9-bis-(4-aminophenyl)fluorene, 2,3-diaminophenol, 2,5-diaminophenol, 2,6-diaminophenol, 3,4-diaminophenol, 3,5-diaminophenol, 2,3-diaminopyridine, 2,5-diaminopyridine, 2,6-diaminopyridine, 3,4-diaminopyridine, and 3,5-diaminopyridine. Furthermore, such diamine compounds can be used singly or in mixtures.

Moreover, the molar ratio for the tetracarboxylic acid ester compound and the diamine compound is usually within the range of 55:45 to 45:55. Furthermore, the abovementioned molar ratio for the tetracarboxylic acid ester compound and the diamine compound can be suitably changed to a ratio different from that described above provided that the scope of the present invention is not compromised.

The solvent dissolves the tetracarboxylic acid ester compound and the diamino compound. Examples of the solvent include preferably the type of alcohol used to form the abovementioned tetracarboxylic acid ester. Furthermore, in addition to the type of alcohol, N-methyl-2-pyrrolidone, dimethylacetamide, aromatic hydrocarbons, and the like can be added to this solvent.

Furthermore, conductive fillers, dispersing agents, and the like can be included in the polyimide precursor mixture.

Conductive fillers function as conductive additives. Examples of such conductive fillers include carbon black (oil furnace black, channel black, lamp black, thermal black, Ketjen black, acetylene black, and the like), carbon nanotubes, carbon nanofibers, fullerenes, carbon microcoils, graphite (natural graphite, artificial graphite, and the like), carbon black and carbon fiber short fiber (PAN carbon short fiber, pitch carbon fiber short fiber, and the like), and the like. Such conductive fillers can be used singly or in combinations. Additionally, a dispersing agent is added to make a uniform dispersion of the active substance particles in the mixture slurry for producing a battery electrode. Furthermore, examples of such dispersing agents include sorbitan monooleate, N,N-dimethyllaurylamine, N,N-dimethylstearylamine, N-(coco alkyl)-1,3-diaminopropane, and the like. Furthermore, such dispersing agents can be used singly or in combinations.

In addition, for the conductive fillers to be uniformly dispersed in the monomeric polyimide precursor solutions that contain such conductive fillers, it is preferable for them to be adequately kneaded in a kneading machine such as a roller mill, attritor, ball mill, pebble mill, sand mill, Kady mill, Mechano-Fusion, stone mill, or the like.

In the mixture slurry for producing a battery electrode relating to a second aspect of the present invention, the monomeric polyimide precursor solution relating to the first aspect furthermore contains active substance particles.

Examples of active substance particles include silicon (Si) particles, silicon oxide (SiO) particles, silicon alloy particles, tin (Sn) particles, or the like.

Examples of silicon alloys include solid solutions of silicon with one or more other elements, intermetallic compounds of silicon with one or more other elements, eutectic alloys of silicon with one or more other elements, and the like. Examples of methods for preparing silicon alloys include the arc fusion method, liquid quenching method, mechanical alloying method, sputtering method, chemical vapor deposition method, calcining method, and the like. In particular, examples of the liquid quenching method include the single roller method, the double roller method, and various kinds of atomizer methods such as the gas atomizer method, water atomizer method, disk atomizer method, and the like.

Moreover, the active substance particles can be core-shell type active substance particles in which the aforementioned active substance particles are coated with a metal or the like. Such core-shell type active substance particles can be manufactured using an electroless deposition method, electrolytic method, chemical reduction method, evaporation method, sputtering method, chemical vapor deposition method, or the like. The shell part is preferably formed from the same metal used to form the current collector body. The calcining of such active substance particles greatly increases their bonding ability toward the current collector body, and can provide superior charge/discharge cycle characteristics. Additionally, the active substance particles can also include materials to be alloyed with lithium. Examples of such materials include germanium, tin, lead, zinc, magnesium, sodium, aluminum, gallium, indium, alloys thereof, and the like.

In addition, the active substance particles can undergo surface treatment with a silane coupling agent. If active substance particles are treated in this manner, along with the active substance particles being well dispersed in the mixture slurry, the active substance binding ability toward polyimide resin can be increased.

The active substance particles preferably have an average particle diameter of 0.5 μm or greater and less than 20 μm, and more preferably 0.5 μm or greater and less than 10 μm. The smaller the particle diameter of the active substance particles, the better the cycle characteristics obtained will tend to be. Furthermore, said average particle diameter is measured by a laser diffraction/scattering method using a Microtrac MT3100II, particle diameter distribution measuring apparatus (Nikkiso Co., Ltd.). Additionally, the absolute value of the expansion/contraction of the active substance particle volume associated with the absorption/desorption of lithium in the charging-discharging reaction becomes smaller when active substance particles with a smaller average particle diameter are used. For this reason,

the absolute amount of distortion between the active substance particles within the electrodes during the charging-discharging reaction also becomes smaller. Consequently, no destruction of the polyimide resin template occurs, deterioration of the current collection properties of the electrode is suppressed, and it is possible to obtain good charging and discharging characteristics. Moreover, it is preferable for the particle size distribution of the active substance particles to be as narrow as possible. If the particle size distribution is broad, there will be significant differences in size between the active substance particles, and since significant absolute differences will be present in the expansion/contraction in the volume associated with the absorption/desorption of lithium, distortions will occur within the active substance layers, and there is increased concern that destruction of the polyimide resin template will occur.

Furthermore, the active substance particles are present in a dispersed state in the polyimide precursor varnish comprising primarily a tetracarboxylic acid ester compound, a diamino compound with anionic groups, and a solvent. Additionally, the active substance particles relating to this aspect are the active substance particles used for anodes in the nonaqueous secondary batteries among lithium ion secondary batteries.

A monomeric polyimide precursor relating to a third aspect of the present invention contains a tetracarboxylic acid ester compound, and a diamino compound having anionic groups.

The "tetracarboxylic acid ester compound" and "diamino compound having anionic groups" are the same "tetracarboxylic acid ester compound" and "diamino compound having anionic groups" as described in the first aspect. In addition, the polyimide precursor can also contain the abovementioned conductive fillers and dispersing agents. Such polyimide precursors can be obtained by mixing together the "tetracarboxylic acid ester compound" and "diamino compound having anionic groups", and can also be obtained by drying the abovementioned monomeric polyimide precursor solution. Furthermore, the "tetracarboxylic acid ester compound" and "diamino compound having anionic groups" can be in solution form or in powder form.

A polyimide resin relating to a fourth aspect of the present invention can be obtained by heating the monomeric polyimide precursor solution relating to the first aspect, or by heating the polyimide precursor relating to the third aspect.

A polyimide resin relating to a fifth aspect of the present invention that is the polyimide resin relating to the fourth aspect with a glass transition temperature of 300 °C or higher.

A polyimide resin relating to a sixth aspect of the present invention that is the polyimide resin relating to either the fourth or fifth aspect having a molecular weight between crosslinks of 30 or less. Furthermore, the molecular weight between crosslinks is preferably 20 or less, and further preferably 10 or less. Furthermore, when the molecular weight between crosslinks is smaller, three-dimensional crosslinks will appear. The molecular weight between crosslinks is an important factor for studying the point binding of the adherend.

A polyimide resin relating to a seventh aspect of the present invention is the polyimide resin relating to any one of the fourth through sixth aspects having amide groups.

A battery electrode relating to an eighth aspect of the present invention is equipped with a current collector body and an active substrate layer.

The current collector body is preferably a conductive metal foil. Such a conductive metal foil can be formed from a metal such as copper, nickel, iron, titanium, cobalt, or the like, or can be formed from an alloy obtained from combinations of such metals.

In addition, it is preferable to conduct surface roughening to increase the binding between the current collector body and the active substance layer. Furthermore, surface roughening of the current collector body can also be carried out by providing electrolytic copper or an electrolytic copper alloy on the surface of the foil. Additionally, surface roughening of the current collector body can also be carried out by using a surface roughening treatment. Examples of such surface roughening treatments include vapor phase epitaxy, etching, grinding, and the like. Examples of vapor phase epitaxy methods include the sputtering method, CVD method, chemical vapor deposition method, and the like. Examples of etching methods include the physical etching method, chemical etching method, and the like. Examples of grinding methods include grinding with sandpaper, grinding by the blast method, and the like.

Moreover, to increase the binding of the active substance layer, an undercoat layer can be formed on the current collector body. The undercoat layer is preferably formed from a resin that can adhere well to the polyimide resin and a conductive filler that imparts conductivity to the undercoat. For example, the undercoat layer is preferably formed by a chemical dispersing a conductive filler into the abovementioned monomeric polyimide precursor solution, or a chemical dispersing a conductive filler into a polyamic acid polyimide precursor solution.

Furthermore, examples of conductive fillers, without being limiting in any way, include carbon black (oil furnace black, channel black, lamp black, thermal black, Ketjen black, acetylene black, and the like), carbon nanotubes, carbon nanofibers, fullerenes, carbon microcoils, graphite (natural graphite, artificial graphite, and the like), conductive potassium titanate whisker, filamentary nickel, carbon fiber short fiber (PAN carbon short fiber, pitch carbon fiber short fiber, and the like), whicker fibers, metal particles (copper particles, tin particles, nickel particles, silver particles, and the like), metal oxides (titanium dioxide, tin dioxide, zinc dioxide, nickel oxide, copper oxide, and the like), metal carbides (titanium carbide, silicon carbide, and the like), and the like. These conductive fillers can be used singly or in combinations.

When undercoat layer is formed on the current collector body as described above, it is preferable to apply the

abovementioned mixture slurry after the "polyimide resin solution with conductive filler" used to form the undercoat layer undergoes heating at a sufficient temperature between 50 °C, and 100 °C for several tens of minutes. If done in this manner, the abovementioned mixture slurry will be applied when the undercoat layer is not yet completely in a solidified state, which will give good adhesion between the undercoat layer and the active substance layer.

Furthermore, the current collector body relating to this aspect is a current collector body used for anodes in non-aqueous secondary batteries such as lithium ion secondary batteries, and so on.

The active substance layer is obtained from the abovementioned mixture slurry. In addition, this active substance layer is coated onto the current collector body. In other words, the active substance layer is formed on the current collector body. Furthermore, this active substance layer is primarily composed of active substance particles and polyimide resin. The polyimide resin in this active substance layer has a porous structure, which functions as a template material to enclose the active substances, and along with binding the active substance particles within these pores, it plays a role in the binding between the active substance particles and the current collector body. Furthermore, at this time, the polyimide resin will generally have a porosity in the range of from 20 parts by volume to 40 parts by volume. Additionally, as mentioned above, this polyimide resin will have anionic groups. Furthermore, the polyimide resin will primarily be formed from units derived from a tetracarboxylic acid and units derived from a diamine. Thus, as mentioned above, the anionic groups are bonded to the diamine-derived units.

In forming the battery electrode relating to the present aspect from the abovementioned mixture slurry, after the abovementioned mixture slurry is coated onto the current collector body or onto the undercoat layer, this coating can be calcined. Furthermore, it is preferable for the calcining of the coating to be conducted under a non-oxidizing atmosphere such as a vacuum, a nitrogen atmosphere, an argon atmosphere, or the like, or under a reducing atmosphere such as a hydrogen atmosphere, or the like. The calcining temperature is preferably at or above the temperature at which the monomeric polyimide precursor in the abovedescribed mixture slurry will become a suitably high-molecular-weight polymer through imidization, and at or below the melting point of current collector body and the active substance particles. Furthermore, the recommended calcining temperature for the mixture slurry relating to the present aspect is between 100 °C and 400 °C. Furthermore, the calcining temperature for this mixture slurry is more preferably between 100 °C and 300 °C, still further preferably between 150 °C and 300 °C, and still further preferably between 200 °C and 300 °C. Along with avoiding deterioration of the current collector body due to heat, this serves to preserve the crosslinked structure of the polyimide resin. Examples of calcining methods include the use of a common constant temperature oven, plasma discharge sintering, the hot press method, and the like. By using such methods to form the active substance layer on the current collector body or the undercoat layer, the porous polyimide layer provides strong binding not only mutually between the active substance particles in the active substance layer, but also between the active substance particles and the current collector body.

Additionally, before calcining the coating, this coating can be rolled together with the current collector body, or the rolling can be omitted, but it is preferable to omit the rolling. Furthermore, if the "packing density of the active substance particles in the coating", the "adhesiveness between active substance particles", or the "adhesiveness between active substance particles and the current collector body" becomes excessively high when the coating and the current collector body are rolled, this will decrease the lifetime of the charging/discharging cycle. On the other hand, if the rolling is not done, this avoids damaging the current collector body or the polyimide resin template, with the result that good charging/discharging cycle properties will be obtained.

In the battery electrode relating to the present aspect, the polyimide resin content in the active substance layer is preferably 5 wt% or more and 50 wt% or less based on the total weight of the active substance layer, more preferably 5 wt% or more and 30 wt% or less, and further preferably 5 wt% or more and 20 wt% or less. Moreover, the volume content of the polyimide resin in the active substance layer is preferably 5 vol% or more and 50 vol% or less based on the total volume of the active substance layer. If the polyimide content in the active substance layer is less than 5 wt% or 5 vol%, there will be insufficient mutual adhesion between the active substance particles or insufficient adhesion between the active substance particles and the current collector body, and if the polyimide content in the active substance layer exceeds 50 wt% or 50 vol%, the resistance within the battery electrode will increase and the initial charging might be difficult.

The method for producing a mixture slurry relating to a ninth aspect of the present invention has a first mixing step and a second mixing step. In the first mixing step, a polyimide precursor solution with carbon black is prepared by mixing carbon black into monomeric polyimide precursor solution so as not to apply the shear stress substantially. Furthermore, the expression "so as not to apply the shear stress substantially" means that a degree of shear stress is permissible only if no damage to the carbon black fibers occurs.

Moreover, the monomeric polyimide precursor solution contains a tetracarboxylic acid ester compound as a monomer, a diamine compound having anionic groups as a monomer, and a solvent. Furthermore, the tetracarboxylic acid ester compound and the diamino compound are dissolved in the solvent. In the second mixing step, a mixture slurry is prepared by mixing active substance particles into the polyimide precursor solution with carbon black. Furthermore, based on 100 parts by weight of the active substance particles, the solids fraction of the monomeric polyimide precursor

solution is preferably within the range from 5 parts by weight to 11 parts by weight.

Thus, if this method for preparing the mixture slurry is utilized, the carbon black will not be damaged and the carbon black will be dispersed in the monomeric polyimide precursor solution. Consequently, if this method for preparing the mixture slurry is utilized, the active substance layer obtained from this method for preparing the mixture slurry will have good conductivity.

The method for producing a battery electrode relating to a tenth aspect of the present invention has a coating step and the heating step. In the coating step, the abovementioned mixture slurry is coated onto a current collector body to form a mixture slurry coating on the current collector body. Furthermore, an undercoat layer can already have been formed on the current collector body. In the heating step, the mixture slurry coating is heated to form a porous active substance layer. Furthermore, in the heating step, the mixture slurry coating is preferably heated to a temperature of 100 °C or above and less than 400 °C, and is further preferably heated to a temperature of 150 °C or above and less than 350 °C.

In addition, to improve the "active substance packing density", "adhesiveness between the active substance particles", and "adhesiveness between the active substance particles and the collector body", the active substance layer and current collector body are usually rolled when the battery electrode is formed. However, a porous active substance layer is formed from the mixture slurry in this battery electrode formation method. In other words, the active substance layer is not rolled in this battery electrode formation method. In this way, the polyimide resin in the active substance layer is made porous, and the active substance particles are enclosed in the polyimide resin that has been made porous. For this reason, the active substance particles are unlikely to fall out of the polyimide resin even with repeated intense expansion and contraction by the active substance particles.

Additionally, the mixture slurry coating is heated at a relatively low temperature in this battery electrode formation method. For this reason, the polyimide resin can be relatively flexible if this battery electrode formation method is utilized. Consequently, it will be easier for the polyimide resin to accommodate the expansion of the active substance particles if this battery electrode formation method is utilized, and the active substance particles can be prevented from falling out of the polyimide resin.

## EFFECT OF THE INVENTION

The polyimide precursor solution and the polyimide precursor relating to the present invention can provide stronger binding (in particular, point binding) between the active substance particles and the current collector body compared to conventional polyimide precursor solutions and polyimide precursor. And when the polyimide precursor solutions and polyimide precursor are utilized as a binder for the anode active substance layer in a lithium ion secondary battery, further improved charging/discharging cycle times are expected for lithium ion secondary batteries and the like.

Moreover, when the polyimide precursor solution and the polyimide precursor relating to the present invention are utilized as a binder for the active substance particles, not only can stronger binding (in particular, point binding) between the active substance particles and the current collector body be expected, but also promotion of the uptake of cations (lithium ions and the like) by the free carboxyl groups, which can improve the discharge capacity of lithium ion secondary batteries and the like.

## BRIEF EXPLANATION OF DIAGRAMS

Figure 1 is a chart of measurements using Fourier transform infrared (FT-IR) spectroscopy on strips of polyimide film relating to Working Example 1 of the present invention and Comparative Example 1.

Figure 2 is a chart of dynamic viscoelasticity measurements of strips of polyimide film relating to Working Example 1 of the present invention and Comparative Example 1.

## MODES FOR IMPLEMENTING THE INVENTION

The present invention is explained in further detail below using working examples. Furthermore, the working examples shown below are for illustration only, and do not limit the present invention in any way.

### Working Example 1

1. Preparation of the monomeric polyimide precursor solution

The synthesis vessel was a 500 mL 3-neck flask equipped with a stirring shaft that was fitted with a polytetrafluoroethylene stir paddle. Then, after this synthesis vessel was charged with 10.19 g (0.032 mol) 3,3',4,4'-benzophenonetetracarboxylic acid dianhydride (Daicel Chemical Industries, BTDA), and 2.91 g (0.063 mol) ethanol (Ueno Chemical Industries, Ltd.), the synthesis vessel contents were heated to 90 °C with stirring for 1 hr to prepare a BTDA diester solution as a polyimide precursor solution with a solids fraction of 28 wt%. After the BTDA diester solution was cooled to 45 °C or below, 4.81 g (0.032 mol) of 3,5-diaminobenzoic acid (Tokyo Kasei Industries, Ltd., 3,5-DABA) was added and this was heated again to 50 °C with stirring for 1 hr to prepare the monomeric polyimide precursor solution.

2. Preparation of a lithium ion secondary battery

(1) Preparation of the anode

The abovementioned monomeric polyimide precursor solution was filtered through a #300 SUS mesh. After this filtration, a film was prepared from the monomeric polyimide precursor solution, and measurement of the glass transition temperature ($T_g$) showed it to be 331 °C. A film prepared from the polyimide precursor solution after filtration gave a lower $T_g$ than a film prepared from the polyimide precursor solution before filtration, but this was believed due to removal of impurities by the filtration or to experimental error. To 7.3 g of this monomeric polyimide precursor solution after filtration was added 39.0 g of silicon powder (Fukuda Metal Foil & Powder Co., Ltd., purity 99.9%, average particle diameter 2.1 μm), and 2.4 g Ketjen black (Fukuda Metal Foil & Powder Co., Ltd., primary particle diameter 39.5 nm), followed by thorough mixing using a planetary (self-revolving) type mixer (Shinkey) to prepare the anode mixture slurry.

After coating this anode mixture slurry onto one side (rough surface) of an electrolytic copper foil (thickness: 35 μm) as the current collector body to give a surface roughness (arithmetic mean roughness) Rz of 4.0 μm, the thickness of the prepared dried anode intermediate after drying was 19 μm. The anode intermediate was cut into circular shapes with a diameter of 11 mm, and underwent heat treatment at 300 °C for 1 hr (calcining) under a nitrogen atmosphere to prepare a calcined anode.

(2) Counter electrode

The counter electrode was prepared by cutting lithium metal foil (thickness: 0.5 mm) into circular shapes with a diameter of 13 mm.

(3) Nonaqueous electrolyte

A mixture of ethylene carbonate and diethyl carbonate in a ratio of 1:1 (v/v) was prepared, and $LiPF_6$ was dissolved therein to give 1 mole/L, and this was used as the nonaqueous electrolyte.

(4) Preparation of a lithium ion secondary battery

The anode, counter electrode, and nonaqueous solvent prepared as mentioned above were combined inside a CR2032 SUS coin cell to prepare the lithium ion secondary battery.

Furthermore, the cathode and counter electrode were arranged to face each other via a polypropylene separator (Celgard 2400, Celgard Co.) reinforced with glass fiber fabric.

3. Measurement of various properties

(1) Confirmation of the amide group by Fourier transform infrared (FT-IR) spectroscopy

After casting the abovementioned monomeric polyimide precursor solution onto a glass plate, this was stretched thin using a doctor blade and was calcined at 200 °C for 1 hr, 250 °C for 1 hr, 300 °C for 1 hr, and 350 °C for 1 hr. Then, the piece of polyimide film formed on the glass plate was peeled off from the glass plate to obtain the piece of polyimide film.

Next, this piece of polyimide film was placed in an FTIR-8400 instrument (Shimadzu Corp.), and the FT-IR measurement was carried out using the thin-film transmission method. In the IR spectrum obtained, confirmation came from the peaks in the vicinity of 3350 $cm^{-1}$ and 3100 $cm^{-1}$ belonging to the unassociated and associated amide group N-H stretching modes, respectively. (see Fig. 1). Consequently, the presence of amide groups in this piece of polyimide film was confirmed. Therefore, it was presumed that the carboxyl groups of the diaminobenzoic acid were converted to amide groups by heating.

(2) Measurement of the glass transition temperature ($T_g$)

After casting the abovementioned monomeric polyimide precursor solution onto a glass plate, this was stretched thin using a doctor blade and was calcined at 200 °C for 1 hr, 250 °C for 1 hr, 300 °C for 1 hr, and 350 °C for 1 hr. Then, the piece of polyimide film formed on the glass plate was peeled off from the glass plate to obtain the piece of polyimide film.

After this piece of polyimide film was placed in an EXSTAR 6000, dynamic viscoelasticity measuring instrument (Seiko Instruments), the storage elastic modulus was measured at a frequency of 1 Hz and a temperature program of 2 °C/min to obtain the storage elastic modulus curve for this piece of polyimide film. As shown in Fig. 2, the glass transition temperature ($T_g$) for this piece of polyimide film was the temperature that corresponds to the intersection point between "an extrapolation from the low-temperature, straight-line portion of the storage modulus curve", and "the tangential line at the point considered to have the maximum slope in the glass transition region of the curve". The glass transition temperature ($T_g$) for this piece of polyimide film was 339 °C.

(3) Molecular weight between crosslinks ($M_x$)

After casting the abovementioned monomeric polyimide precursor solution onto a glass plate, this was stretched thin using a doctor blade and was calcined at 200 °C for 1 hr, 250 °C for 1 hr, 300 °C for 1 hr, and 350 °C for 1 hr to prepare a piece of polyimide film.

After this piece of polyimide film was placed in an EXSTAR 6000, dynamic viscoelasticity measuring instrument (Seiko Instruments), the storage elastic modulus was measured at a frequency of 1 Hz and a temperature program of 2 °C/min to obtain the storage elastic modulus curve for this piece of polyimide film. The molecular weight between crosslinks ($M_x$) for this piece of polyimide film was determined by the following formula (1): Furthermore, in formula (1), $\rho$ is the density of the polyimide (1.3 g/cm$^3$), T is the absolute temperature at the point where the storage elastic modulus is extremely small, E' is the storage elastic modulus at the extremely small point, and R is the gas constant. The molecular weight between crosslinks ($M_x$) for this piece of polyimide film was 2.9 (see Fig. 2)

$$M_x = \rho RT/E' \qquad (1)$$

(4) Cross-cut adhesion test

After grinding a CF-T8 copper foil (Fukuda Metal Foil & Powder Co., Ltd., thickness: 18 μm) using P-2000C-Cw sandpaper (Japan Sandpaper), the sanded surface of this copper foil was coated with the abovementioned monomeric polyimide precursor solution to have a film thickness value of between approximately 10 μm and 20 μm after calcining. Thus, after this monomeric polyimide precursor solution was dried under an air atmosphere for 10 min at 100 °C, it was heated to 220 °C under reduced pressure for 1 hr, then calcined at 250 °C under an air atmosphere for 1 hr, and then at 275 °C for 1 hr to give the test piece.

The adhesion strength of the polyimide resin toward copper foil was measured according to the "General Rules of Coating Films for Automobile Parts 4.15, cross-cut adhesion test method (JIS D0202 (1998))". Furthermore, "Askul cellophane tape" from the Askul Co. was used for the cellophane tape. The result was that the adhesion strength of the polyimide resin toward copper foil was 28/100.

In addition, after grinding a silicon wafer (Fujimi Fine Technology Inc., "4 in. silicon wafer, mirror surface finish, semiconductor handling") using P-2000C-Cw sandpaper (Japan Sandpaper), this sanded surface of this silicon wafer was coated with the abovementioned monomeric polyimide precursor solution to have a film thickness value of between approximately 10 μm and 30 μm after calcining. Thus, after this monomeric polyimide precursor solution was dried under an air atmosphere for 10 min at 100 °C, it was heated to 220 °C under reduced pressure for 1 hr, then calcined at 250 °C under an air atmosphere for 1 hr, and then at 275 °C for 1 hr to give the test piece.

The adhesion strength of the polyimide resin toward silicon wafer was measured according to the "General Rules of Coating Films for Automobile Parts 4.15, cross-cut adhesion test method (JIS D0202 (1998))". Furthermore, "Askul cellophane tape" from the Askul Co. was used for the cellophane tape. The result was that the adhesion strength of the polyimide resin toward the silicon wafer was 100/100.

(5) Lithium ion secondary battery charging/discharging cycle test

A charging/discharging cycle test was carried out on the lithium ion secondary battery. The charging/discharging cycle test was carried out for 50 charging/discharging cycles at an ambient temperature of 30 °C, charging/discharging rate of 0.1 C, a voltage cut-off of 0.0 V while charging and 1.0 V while discharging, and the discharge capacity in mAh/g

was measured every cycle. Additionally, the maintenance factor was determined as the "ratio of the discharge capacity for the 30th cycle to the discharge capacity for the 2nd cycle" and "ratio of the discharge capacity for the 50th cycle to the discharge capacity for the 2nd cycle". Furthermore, the specific capacity of the electrode surface of this lithium ion secondary battery was 4.62 mAh/cm$^2$ (see Table 1).

The results were that the discharge capacity was 4309.6 mAh/g for the 1st cycle, 3584.8 mAh/g for the 2nd cycle, 3115.0 mAh/g for the 30th cycle, and 2689.8 mAh/g for the 50th cycle. In addition, the ratio of discharge capacities (maintenance factors) for the 30th cycle vs. the 2nd cycle was (3115.0/3584.8) x 100 = 86.89%, and for 50th cycle vs. the 2nd cycle was (2689.8/3584.8) x 100 = 75.03% (see Table 1).

Working Example 2

Except for "preparing the dried anode intermediate after applying a coating of the anode mixture slurry to one surface of an electrolytic copper foil to give a thickness of 14 μm after drying", a battery was prepared in the same manner as for Working Example 1, and its charging/discharging cycle characteristics were measured in the same manner as for Working Example 1. Furthermore, the specific capacity of the electrode surface of this lithium ion secondary battery was 4.70 mAh/cm$^2$ (see Table 2).

The results were that the discharge capacity was 4194.7 mAh/g for the 1st cycle, 3470.1 mAh/g for the 2nd cycle, 3026.7 mAh/g for the 30th cycle, and 2614.1 mAh/g for the 50th cycle. In addition, the ratio of discharge capacities (maintenance factors) for the 30th cycle vs. the 2nd cycle was (3026.7/3470.1) x 100 = 87.22%, and for 50th cycle vs. the 2nd cycle was (2614.1/3470.1) x 100 = 75.33% (see Table 2).

Working Example 3

Except for "preparing the dried anode intermediate after applying a coating of the anode mixture slurry to one surface of an electrolytic copper foil to give a thickness of 23 μm after drying" and "preparing the calcined anode by cutting the anode intermediate into circular pieces 11 mm in diameter which were then subjected to heat treatment (calcining) at 350 °C for 4 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 4.75 mAh/cm$^2$ (see Table 2).

The results were that the discharge capacity was 4238.8 mAh/g for the 1st cycle, 3500.8 mAh/g for the 2nd cycle, 3014.6 mAh/g for the 30th cycle, and 2601.3 mAh/g for the 50th cycle. In addition, the ratio of discharge capacities (maintenance factors) for the 30th cycle vs. the 2nd cycle was (3014.6/3500.8) x 100 = 86.11%, and for 50th cycle vs. the 2nd cycle was (2601.3/3500.8) x 100 = 74.31% (see Table 2).

Working Example 4

Except for "preparing the dried anode intermediate after applying a coating of the anode mixture slurry to one surface of an electrolytic copper foil to give a thickness of 16 μm after drying" and "preparing the calcined anode by cutting the anode intermediate into circular pieces 11 mm in diameter which were then subjected to heat treatment (calcining) at 350 °C for 4 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 4.80 mAh/cm$^2$ (see Table 2).

The results were that the discharge capacity was 4121.4 mAh/g for the 1st cycle, 3414.3 mAh/g for the 2nd cycle, 2945.5 mAh/g for the 30th cycle, and 2544.7 mAh/g for the 50th cycle. In addition, the ratio of discharge capacities (maintenance factors) for the 30th cycle vs. the 2nd cycle was (2945.5/3414.3) x 100 = 86.27%, and for 50th cycle vs. the 2nd cycle was (2544.7/3414.3) x 100 = 74.53% (see Table 2).

Working Example 5

Except for "preparing the dried anode intermediate after applying a coating of the anode mixture slurry to one surface of an electrolytic copper foil to give a thickness of 15 μm after drying" and "preparing the calcined anode by cutting the anode intermediate into circular pieces 11 mm in diameter which were then subjected to heat treatment (calcining) at 350 °C for 4 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 4.90 mAh/cm$^2$ (see Table 2).

The results were that the respective discharge capacity was 4144.9 mAh/g for the 1st cycle, 3412.6 mAh/g for the 2nd cycle, 2959.5 mAh/g for the 30th cycle, and 2531.3 mAh/g for the 50th cycle. In addition, the ratio of discharge capacities (maintenance factors) for the 30th cycle vs. the 2nd cycle was (2959.5/3412.6) x 100 = 86.72%, and for 50th cycle vs. the 2nd cycle was (2531.3/3412.6) x 100 = 74.18% (see Table 2).

Working Example 6

Except for "using 43.3780 g silicon powder (Fukuda Metal Foil & Powder Co., Ltd.; purity: 99.9%; average particle diameter: 0.9 μm) in the preparation of the anode", "preparing the dried anode intermediate after applying a coating of the anode mixture slurry to one surface of an electrolytic copper foil to give a thickness of 1 μm after drying" and "preparing the calcined anode by cutting the anode intermediate into circular pieces 11 mm in diameter which were then subjected to heat treatment (calcining) at 200 °C for 10 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 1.82 $mAh/cm^2$ (see Table 2).

The results were that the discharge capacity was 4425.8 mAh/g for the 1st cycle, 3843.5 mAh/g for the 2nd cycle, 3364.5 mAh/g for the 30th cycle, and 3021.8 mAh/g for the 50th cycle. In addition, the ratio of discharge capacities (maintenance factors) for the 30th cycle vs. the 2nd cycle was (3364.5/3843.5) x 100 = 87.54%, and for 50th cycle vs. the 2nd cycle was (3021.8/3843.5) x 100 = 78.62% (see Table 2).

Working Example 7

Except for "using 43.0836 g silicon powder (Fukuda Metal Foil & Powder Co., Ltd.; purity: 99.9%; average particle diameter: 0.9 μm) in the preparation of the anode", "preparing the dried anode intermediate after applying a coating of the anode mixture slurry to one surface of an electrolytic copper foil to give a thickness of 3 μm after drying" and "preparing the calcined anode by cutting the anode intermediate into circular pieces 11 mm in diameter which were then subjected to heat treatment (calcining) at 200 °C for 10 hr under a nitrogen atmosphere", a battery was prepared in the same manner as for Working Example 1, and its charging/discharging cycle characteristics were measured in the same manner as for Working Example 1. Furthermore, the maintenance factor was determined in this working example as the "ratio of the discharge capacity after 10 cycles to the discharge capacity after 2 cycles". Furthermore, the specific capacity of the electrode surface of this lithium ion secondary battery was 2.12 $mAh/cm^2$ (see Table 3).

The results were that the discharge capacity was 3541.5 mAh/g for the 1st cycle, 3076.5 mAh/g for the 2nd cycle, 3026.4 mAh/g for the 10th cycle, 2803.4 mAh/g for the 30th cycle, and 2424.6 mAh/g for the 50th cycle. In addition, the ratio of discharge capacities (maintenance factors) for the 10th cycle vs. the 2nd cycle was (3026.4/3076.5) x 100 = 98.37%, for the 30th cycle vs. the 2nd cycle was (2803.4/3076.5) x 100 = 91.12%, and for 50th cycle vs. the 2nd cycle was (2424.6/3076.5) x 100 = 78.81% (see Table 3).

Working Example 8

Except for "using 43.3780 g silicon powder (Fukuda Metal Foil & Powder Co., Ltd.; purity: 99.9%; average particle diameter: 0.9 μm) in the preparation of the anode", and "preparing the dried anode intermediate after applying a coating of the anode mixture slurry to one surface of an electrolytic copper foil to give a thickness of 1 μm after drying", a battery was prepared in the same manner as for Working Example 1, and its charging/discharging cycle characteristics were measured in the same manner as for Working Example 1. Furthermore, the specific capacity of the electrode surface of this lithium ion secondary battery was 1.69 $mAh/cm^2$ (see Table 3).

The results were that the discharge capacity was 4700.7 mAh/g for the 1st cycle, 4124.8 mAh/g for the 2nd cycle, 3401.5 mAh/g for the 30th cycle, and 2955.6 mAh/g for the 50th cycle. In addition, the ratio of discharge capacities (maintenance factors) for the 30th cycle vs. the 2nd cycle was (3401.5/4124.8) x 100 = 82.46%, and for 50th cycle vs. the 2nd cycle was (2955.6/4124.8) x 100 = 71.65% (see Table 3).

Working Example 9

Except for "using 43.0836 g silicon powder (Fukuda Metal Foil & Powder Co., Ltd.; purity: 99.9%; average particle diameter: 0.9 μm) in the preparation of the anode", and "preparing the dried anode intermediate after applying a coating of the anode mixture slurry to one surface of an electrolytic copper foil to give a thickness of 1 μm after drying", a battery was prepared in the same manner as for Working Example 1, and its charging/discharging cycle characteristics were measured in the same manner as for Working Example 1. Furthermore, the specific capacity of the electrode surface of this lithium ion secondary battery was 2.00 $mAh/cm^2$ (see Table 3).

The results were that the discharge capacity was 3898.5 mAh/g for the 1st cycle, 3384.8 mAh/g for the 2nd cycle, 2997.9 mAh/g for the 30th cycle, and 2559.5 mAh/g for the 50th cycle. In addition, the ratio of discharge capacities (maintenance factors) for the 30th cycle vs. the 2nd cycle was (2997.9/3384.8) x 100 = 88.57%, and for 50th cycle vs. the 2nd cycle was (2559.5/3384.8) x 100 = 75.62% (see Table 3).

Working Example 10

Except for "using 43.3780 g silicon powder (Fukuda Metal Foil & Powder Co., Ltd.; purity: 99.9%; average particle diameter: 0.9 μm) in the preparation of the anode", "preparing the dried anode intermediate after applying a coating of the anode mixture slurry to one surface of an electrolytic copper foil to give a thickness of 1 μm after drying" and "preparing the calcined anode by cutting the anode intermediate into circular pieces 11 mm in diameter which were then subjected to heat treatment (calcining) at 350 °C for 4 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 1.77 mAh/cm$^2$ (see Table 3).

The results were that the discharge capacity was 4282.7 mAh/g for the 1st cycle, 3748.8 mAh/g for the 2nd cycle, 3113.2 mAh/g for the 30th cycle, and 2704.6 mAh/g for the 50th cycle. In addition, the ratio of discharge capacities (maintenance factors) for the 30th cycle vs. the 2nd cycle was (3113.2/3748.8) x 100 = 83.05%, and for 50th cycle vs. the 2nd cycle was (2704.6/3748.8) x 100 = 72.15% (see Table 3).

Working Example 11

Except for "using 43.0836 g silicon powder (Fukuda Metal Foil & Powder Co., Ltd.; purity: 99.9%; average particle diameter: 0.9 μm) in the preparation of the anode", "preparing the dried anode intermediate after applying a coating of the anode mixture slurry to one surface of an electrolytic copper foil to give a thickness of 1 μm after drying" and "preparing the calcined anode by cutting the anode intermediate into circular pieces 11 mm in diameter which were then subjected to heat treatment (calcining) at 350 °C for 4 h under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 1.95 mAh/cm$^2$ (see Table 3).

The results were that the discharge capacity was 3714.4 mAh/g for the 1st cycle, 3231.6 mAh/g for the 2nd cycle, 2835.7 mAh/g for the 30th cycle, and 2405.2 mAh/g for the 50th cycle. In addition, the ratio of discharge capacities (maintenance factors) for the 30th cycle vs. the 2nd cycle was (2835.7/3231.6) x 100 = 87.75%, and for 50th cycle vs. the 2nd cycle was (2405.2/3231.6) x 100 = 74.43% (see Table 3).

Working Example 12

Except for "using 43.3780 g silicon powder (Fukuda Metal Foil & Powder Co., Ltd.; purity: 99.9%; average particle diameter: 0.9 μm) in the preparation of the anode", "preparing the dried anode intermediate after applying a coating of the anode mixture slurry to one surface of an electrolytic copper foil to give a thickness of 1 μm after drying" and "preparing the calcined anode by cutting the anode intermediate into circular pieces 11 mm in diameter which were then subjected to heat treatment (calcining) at 400 °C for 1 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 1.69 mAh/cm$^2$ (see Table 3).

The results were that the discharge capacity was 4424.0 mAh/g for the 1st cycle, 3873.1 mAh/g for the 2nd cycle, 3226.9 mAh/g for the 30th cycle, and 2686.3 mAh/g for the 50th cycle. In addition, the ratio of discharge capacities (maintenance factors) for the 30th cycle vs. the 2nd cycle was (3226.9/3873.1) x 100 = 83.32%, and for 50th cycle vs. the 2nd cycle was (2686.3/3873.1) x 100 = 69.36% (see Table 3).

Working Example 13

Except for "using 43.0836 g silicon powder (Fukuda Metal Foil & Powder Co., Ltd.; purity: 99.9%; average particle diameter: 0.9 μm) in the preparation of the anode", "preparing the dried anode intermediate after applying a coating of the anode mixture slurry to one surface of an electrolytic copper foil to give a thickness of 1 μm after drying" and "preparing the calcined anode by cutting the anode intermediate into circular pieces 11 mm in diameter which were then subjected to heat treatment (calcining) at 400 °C for 1 hr under a nitrogen atmosphere", a battery was prepared in the same manner as for Working Example 1, and its charging/discharging cycle characteristics were measured in the

same manner as for Working Example 1. Furthermore, the specific capacity of the electrode surface of this lithium ion secondary battery was 1.87 mAh/cm$^2$ (see Table 4).

The results were that the discharge capacity was 3870.7 mAh/g for the 1$^{st}$ cycle, 3391.8 mAh/g for the 2$^{nd}$ cycle, 2977.3 mAh/g for the 30$^{th}$ cycle, and 2524.6 mAh/g for the 50$^{th}$ cycle. In addition, the ratio of discharge capacities (maintenance factors) for the 30$^{th}$ cycle vs. the 2$^{nd}$ cycle was (2977.3/3391.8) x 100 = 87.78%, and for 50$^{th}$ cycle vs. the 2$^{nd}$ cycle was (2524.6/3391.8) x 100 = 74.43% (see Table 4).

Working Example 14

Except for "using 38.9802 g silicon powder (Fukuda Metal Foil & Powder Co., Ltd.; purity: 99.9%; average particle diameter: 0.9 μm) in the preparation of the anode", and "preparing the dried anode intermediate after applying a coating of the anode mixture slurry to one surface of an electrolytic copper foil to give a thickness of 1 μm after drying", a battery was prepared in the same manner as for Working Example 1, and its charging/discharging cycle characteristics were measured in the same manner as for Working Example 1. Furthermore, with 30 cycles of charging/discharging, the maintenance factors in this working example were determined as the "ratio of the discharge capacity for the 10$^{th}$ cycle to the discharge capacity for the 2$^{nd}$ cycle" and "ratio of the discharge capacity for the 30$^{th}$ cycle to the discharge capacity for the 2$^{nd}$ cycle". Furthermore, the specific capacity of the electrode surface of this lithium ion secondary battery was 2.07 mAh/cm$^2$ (see Table 4).

The results were that the discharge capacity was 4448.6 mAh/g for the 1$^{st}$ cycle, 3820.2 mAh/g for the 2$^{nd}$ cycle, 3738.1 mAh/g for the 10$^{th}$ cycle, and 3448.6 mAh/g for the 30$^{th}$ cycle. In addition, the ratio of discharge capacities (maintenance factors) for the 10$^{th}$ cycle vs. the 2$^{nd}$ cycle was (3738.1/3820.2) x 100 = 97.85%, and for 30$^{th}$ cycle vs. the 2$^{nd}$ cycle was (3448.6/3820.2) x 100 = 90.28% (see Table 4).

Working Example 15

Except for "using 46.9837 g silicon powder (Fukuda Metal Foil & Powder Co., Ltd.; purity: 99.9%; average particle diameter: 0.9 μm) in the preparation of the anode", "preparing the dried anode intermediate after applying a coating of the anode mixture slurry to one surface of an electrolytic copper foil to give a thickness of 4 μm after drying" and "preparing the calcined anode by cutting the anode intermediate into circular pieces 11 mm in diameter which were then subjected to heat treatment (calcining) at 200 °C for 10 hr under a nitrogen atmosphere", a battery was prepared in the same manner as for Working Example 1, and its charging/discharging cycle characteristics were measured in the same manner as for Working Example 1. Furthermore, with 10 cycles of charging/discharging, the maintenance factors in this working example were determined as the "ratio of the discharge capacity for the 10$^{th}$ cycle to the discharge capacity for the 2$^{nd}$ cycle". Furthermore, the specific capacity of the electrode surface of this lithium ion secondary battery was 1.67 mAh/cm$^2$ (see Table 4).

The results were that the discharge capacity was 3736.7 mAh/g for the 1$^{st}$ cycle, 3195.2 mAh/g for the 2$^{nd}$ cycle, and 3083.1 mAh/g for the 10$^{th}$ cycle. In addition, the ratio of discharge capacities (maintenance factor) for the 10$^{th}$ cycle vs. the 2$^{nd}$ cycle was (3083.1/3195.2) x 100 = 96.49% (see Table 4).

Working Example 16

Except for "using 46.9837 g silicon powder (Fukuda Metal Foil & Powder Co., Ltd.; purity: 99.9%; average particle diameter: 0.9 μm) in the preparation of the anode", "preparing the dried anode intermediate after applying a coating of the anode mixture slurry to one surface of an electrolytic copper foil to give a thickness of 4 urn after drying" and "preparing the calcined anode by cutting the anode intermediate into circular pieces 11 mm in diameter which were then subjected to heat treatment (calcining) at 200 °C for 10 hr under a nitrogen atmosphere", a battery was prepared in the same manner as for Working Example 1, and its charging/discharging cycle characteristics were measured in the same manner as for Working Example 1. Furthermore, with 10 cycles of charging/discharging, the maintenance factor was determined in this working example as the "ratio of the discharge capacity after 10 cycles to the discharge capacity after 2 cycles". Furthermore, the specific capacity of the electrode surface of this lithium ion secondary battery was 1.49 mAh/cm$^2$ (see Table 4).

The results were that the discharge capacity was 4022.2 mAh/g for the 1$^{st}$ cycle, 3490.8 mAh/g for the 2$^{nd}$ cycle, and 3441.9 mAh/g for the 10$^{th}$ cycle. In addition, the ratio of discharge capacities (maintenance factor) for the 10$^{th}$ cycle vs. the 2$^{nd}$ cycle was (3441.9/3490.8) x 100 = 98.60% (see Table 4).

(Comparative Example 1)

Except for replacing 4.81 g (0.032 mol) of 3,5-diaminobenzoic acid (3,5-DABA) with 3.47 g (0.032 mol) of meta-phenylenediamine (m-PDA), a monomeric polyimide precursor solution was prepared in the same manner as for Working Example 1, and its physical properties were measured in the same manner as for Working Example 1 (see Table 1).

The results were that in the IR spectrum obtained, no peaks were observed in the vicinity of 3350 $cm^{-1}$ and 3100 $cm^{-1}$. Moreover, the polyimide resin obtained from the abovementioned monomeric polyimide precursor solution had a glass transition temperature of 308 °C, a molecular weight between crosslinks of 181, and an adhesion strength toward copper foil of 0/100. Furthermore, this polyimide resin had a weaker adhesion strength, and had already delaminated by the time it was cut into a grid pattern with a cutter knife.

(Reference Example 1)

After grinding a silicon wafer (Fujimi Fine Technology Inc., "4 in. silicon wafer, mirror surface finish, semiconductor handling") using P-2000C-Cw sandpaper (Japan Sandpaper), the sanded surface of this silicon wafer was coated with the abovementioned monomeric polyimide precursor solution in the same manner as in Comparative Example 1 to have a film thickness of between approximately 10 μm and 30 μm after calcining. Thus, after this monomeric polyimide precursor solution was dried under an air atmosphere for 10 min at 100 °C, it was heated to 220 °C under reduced pressure for 1 hr, then calcined at 250 °C under an air atmosphere for 1 hr, and then at 275 °C for 1 hr to give the test piece.

The adhesion strength of the polyimide resin toward silicon wafer was measured according to the "General Rules of Coating Films for Automobile Parts 4.15, cross-cut adhesion test method (JIS D0202 (1998))". Furthermore, "Askul cellophane tape" from the Askul Co. was used for the cellophane tape. The result was that the adhesion strength of the polyimide resin toward the silicon wafer was 100/100.

[Table 1]

| Confirmatory item | Working Example 1 | Comparative Example 1 |
|---|---|---|
| Peaks in the vicinity of 3350 $cm^{-1}$, 3100 $cm^{-1}$ | Present | Absent |
| Glass transition temperature [$T_g$] (°C) | 339 | 308 |
| Molecular weight between crosslinks [$M_x$] | 2.9 | 181 |
| Cross-cut adhesion strength | 28/100 | 0/100 |
| Adhesion strength toward a silicon wafer | 100/100 | 100/100 (reference example) |

(Comparative Example 2)

Except for "replacing 4.81 g (0.032 mol) of 3,5-diaminobenzoic acid (3,5-DABA) with 3.47 g (0.032 mol) of meta-phenylenediamine (m-PDA) in the preparation of the monomeric polyimide precursor solution", and "preparing the dried anode intermediate after applying a coating of the anode mixture slurry to one surface of an electrolytic copper foil to give a thickness of 20 μm after drying", a battery was prepared in the same manner as for Working Example 1, and its charging/discharging cycle characteristics were measured in the same manner as for Working Example 1. Furthermore, the specific capacity of the electrode surface of this lithium ion secondary battery was 6.31 $mAh/cm^2$ (see Table 5).

The results were that the discharge capacity was 3654.3 mAh/g for the $1^{st}$ cycle, 2857.9 mAh/g for the $2^{nd}$ cycle, 1645.6 mAh/g for the $30^{th}$ cycle, and 1224.9 mAh/g for the $50^{th}$ cycle. In addition, the ratio of discharge capacities (maintenance factors) for the $30^{th}$ cycle vs. the $2^{nd}$ cycle was (1645.6/2857.9) x 100 = 57.58%, and for $50^{th}$ cycle vs. the $2^{nd}$ cycle was (1224.9/2857.9) x 100 = 42.86% (see Table 5). (Comparative Example 3)

Except for "replacing 4.81 g (0.032 mol) of 3,5-diaminobenzoic acid (3,5-DABA) with 3.47 g (0.032 mol) of meta-phenylenediamine (m-PDA) in the preparation of the monomeric polyimide precursor solution", and "preparing the dried anode intermediate after applying a coating of the anode mixture slurry to one surface of an electrolytic copper foil to give a thickness of 35 μm after drying", a battery was prepared in the same manner as for Working Example 1, and its charging/discharging cycle characteristics were measured in the same manner as for Working Example 1. Furthermore, the specific capacity of the electrode surface of this lithium ion secondary battery was 10.13 $mAh/cm^2$ (see Table 5).

The results were that the discharge capacity was 3533.4 mAh/g for the $1^{st}$ cycle, 2661.4 mAh/g for the $2^{nd}$ cycle, 1453.3 mAh/g for the $30^{th}$ cycle, and 1067.3 mAh/g for the $50^{th}$ cycle. In addition, the ratio of discharge capacities (maintenance factors) for the $30^{th}$ cycle vs. the $2^{nd}$ cycle was (1453.3/2661.4) x 100 = 54.61%, and for $50^{th}$ cycle vs. the $2^{nd}$ cycle was (1067.3/2661.4) x 100 = 40.10% (see Table 5).

(Comparative Example 4)

Except for "replacing 4.81 g (0.032 mol) of 3,5-diaminobenzoic acid (3,5-DABA) with 3.47 g (0.032 mol) of meta-phenylenediamine (m-PDA) in the preparation of the monomeric polyimide precursor solution", and "preparing the dried anode intermediate after applying a coating of the anode mixture slurry to one surface of an electrolytic copper foil to give a thickness of 27 μm after drying", a battery was prepared in the same manner as for Working Example 1, and its charging/discharging cycle characteristics were measured in the same manner as for Working Example 1. Furthermore, the specific capacity of the electrode surface of this lithium ion secondary battery was 7.27 $mAh/cm^2$ (see Table 5).

The results were that the discharge capacity was 3410.2 mAh/g for the $1^{st}$ cycle, 2757.5 mAh/g for the $2^{nd}$ cycle, 1207.2 mAh/g for the $30^{th}$ cycle, and 762.8 mAh/g for the $50^{th}$ cycle. In addition, the ratio of discharge capacities (maintenance factors) for the $30^{th}$ cycle vs. the $2^{nd}$ cycle was (1207.2/2757.5) x 100 = 43.78%, and for $50^{th}$ cycle vs. the $2^{nd}$ cycle was (762.8/2757.5) x 100 = 27.66% (see Table 5).

(Comparative Example 5)

Except for "replacing 4.81 g (0.032 mol) of 3,5-diaminobenzoic acid (3,5-DABA) with 3.47 g (0.032 mol) of meta-phenylenediamine (m-PDA) in the preparation of the monomeric polyimide precursor solution", "preparing the dried anode intermediate after applying a coating of the anode mixture slurry to one surface of an electrolytic copper foil to give a thickness of 37 μm after drying", and "preparing the calcined anode by cutting the anode intermediate into circular pieces 11 mm in diameter which were then subjected to heat treatment (calcining) at 350 °C for 4 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 9.50 $mAh/cm^2$ (see Table 5).

The results were that the discharge capacity was 3780.1 mAh/g for the $1^{st}$ cycle, 2709.1 mAh/g for the $2^{nd}$ cycle, 1202.9 mAh/g for the $30^{th}$ cycle, and 825.3 mAh/g for the $50^{th}$ cycle. In addition, the ratio of discharge capacities (maintenance factors) for the $30^{th}$ cycle vs. the $2^{nd}$ cycle was (1202.9/2709.1) x 100 = 44.40%, and for $50^{th}$ cycle vs. the $2^{nd}$ cycle was (825.3/2709.1) x 100 = 30.46% (see Table 5).

(Comparative Example 6)

Except for "replacing 4.81 g (0.032 mol) of 3,5-diaminobenzoic acid (3,5-DABA) with 3.47 g (0.032 mol) of meta-phenylenediamine (m-PDA) in the preparation of the monomeric polyimide precursor solution", "preparing the dried anode intermediate after applying a coating of the anode mixture slurry to one surface of an electrolytic copper foil to give a thickness of 28 μm after drying", and "preparing the calcined anode by cutting the anode intermediate into circular pieces 11 mm in diameter which were then subjected to heat treatment (calcining) at 350 °C for 4 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 6.74 $mAh/cm^2$ (see Table 5).

The results were that the discharge capacity was 3724.5 mAh/g for the $1^{st}$ cycle, 2911.2 mAh/g for the $2^{nd}$ cycle, 1860.4 mAh/g for the $30^{th}$ cycle, and 1410.8 mAh/g for the $50^{th}$ cycle. In addition, the ratio of discharge capacities (maintenance factors) for the $30^{th}$ cycle vs. the $2^{nd}$ cycle was (1860.4/2911.2) x 100 = 63.91%, and for $50^{th}$ cycle vs. the $2^{nd}$ cycle was (1410.8/2911.2) x 100 = 48.46% (see Table 5).

(Comparative Example 7)

Except for "replacing 4.81 g (0.032 mol) of 3,5-diaminobenzoic acid (3,5-DABA) with 3.47 g (0.032 mol) of meta-phenylenediamine (m-PDA) in the preparation of the monomeric polyimide precursor solution", "preparing the dried anode intermediate after applying a coating of the anode mixture slurry to one surface of an electrolytic copper foil to give a thickness of 31 μm after drying", and "preparing the calcined anode by cutting the anode intermediate into circular pieces 11 mm in diameter which were then subjected to heat treatment (calcining) at 350 °C for 4 hr under a nitrogen atmosphere", a battery was prepared in the same manner as for Working Example 1, and its charging/discharging cycle characteristics were measured in the same manner as for Working Example 1. Furthermore, the specific capacity of the electrode surface of this lithium ion secondary battery was 8.86 $mAh/cm^2$ (see Table 5).

The results were that the discharge capacity was 3431.7 mAh/g for the $1^{st}$ cycle, 2629.7 mAh/g for the $2^{nd}$ cycle, 1036.1 mAh/g for the $30^{th}$ cycle, and 746.9 mAh/g for the $50^{th}$ cycle. In addition, the ratio of discharge capacities (maintenance factors) for the $30^{th}$ cycle vs. the $2^{nd}$ cycle was (1036.1/2629.7) x 100 = 39.40%, and for $50^{th}$ cycle vs. the $2^{nd}$ cycle was (746.9/2629.7) x 100 = 28.40% (see Table 5).

[Table 2]

| | | Working Example 1 | Working Example 2 | Working Example 3 | Working Example 4 | Working Example 5 | Working Example 6 |
|---|---|---|---|---|---|---|---|
| Mixture slurry | TCE | BTDA | BTDA | BTDA | BTDA | BTDA | BTDA |
| | DAm | 3,5-DABA | 3,5-DABA | 3,5-DABA | 3,5-DABA | 3,5-DABA | 3,5-DABA |
| Calcining conditions | | 1 hr @ 300 °C | 1 hr @ 300 °C | 4 hr @ 350 °C | 4 hr @ 350 °C | 4 hr @ 350 °C | 10 hr @ 200 °C |
| Film thickness (μm) | | 19 | 14 | 23 | 16 | 15 | 1 |
| Specific capacity (mAh/cm$^2$) | | 4.62 | 4.70 | 4.75 | 4.80 | 4.90 | 1.82 |
| Discharge capacity (mAh/g) | 1$^{st}$ Cycle | 4309.6 | 4194.7 | 4238.8 | 4121.4 | 4144.9 | 4425.8 |
| | 2$^{nd}$ Cycle | 3584.8 | 3470.1 | 3500.8 | 3414.3 | 3412.6 | 3843.5 |
| | 30$^{th}$ Cycle | 3115.0 | 3026.7 | 3014.6 | 2945.5 | 2959.5 | 3364.5 |
| | 50$^{th}$ Cycle | 2689.8 | 2614.1 | 2601.3 | 2544.7 | 2531.3 | 3021.8 |
| Maintenance factor (%) | 30$^{th}$ Cycle/ 2$^{nd}$ Cycle | 86.89 | 87.22 | 86.11 | 86.27 | 86.72 | 87.54 |
| | 50$^{th}$ Cycle/ 2$^{nd}$ Cycle | 75.03 | 75.33 | 74.31 | 74.53 | 74.18 | 78.62 |

[Table 3]

| | | Working Example 7 | Working Example 8 | Working Example 9 | Working Example 10 | Working Example 11 | Working Example 12 |
|---|---|---|---|---|---|---|---|
| Mixture slurry | TCE | BTDA | BTDA | BTDA | BTDA | BTDA | BTDA |
| | DAm | 3,5-DABA | 3,5-DABA | 3,5-DABA | 3,5-DABA | 3,5-DABA | 3,5-DABA |
| Calcining conditions | | 10hr @ 200 °C | 1 hr @ 300 °C | 1 hr @ 300 °C | 4 hr @ 350 °C | 4 hr @ 350 °C | 1 hr @ 400 °C |
| Film thickness (μm) | | 3 | 1 | 1 | 1 | 1 | 1 |
| Specific capacity (mAh/cm$^2$) | | 2.12 | 1.69 | 2.00 | 1.77 | 1.95 | 1.69 |
| Discharge capacity (mAh/g) | 1$^{st}$ cycle | 3541.5 | 4700.7 | 3898.5 | 4282.7 | 3714.4 | 4424.0 |
| | 2$^{nd}$ Cycle | 3076.5 | 4124.8 | 3384.8 | 3748.8 | 3231.6 | 3873.1 |
| | 10$^{th}$ Cycle | 3026.4 | - | - | - | - | - |
| | 30$^{th}$ Cycle | 2803.4 | 3401.5 | 2997.9 | 3113.2 | 2835.7 | 3226.9 |
| | 50$^{th}$ Cycle | 2424.6 | 2955.6 | 2559.5 | 2704.6 | 2405.2 | 2686.3 |

(continued)

| | | Working Example 7 | Working Example 8 | Working Example 9 | Working Example 10 | Working Example 11 | Working Example 12 |
|---|---|---|---|---|---|---|---|
| Maintenance factor (%) | 10th Cycle / 2nd Cycle | 98.37 | - | - | - | - | - |
| | 30th Cycle / 2nd Cycle | 91.12 | 82.46 | 88.57 | 83.05 | 87.75 | 83.32 |
| | 50th Cycle / 2nd Cycle | 78.81 | 71.65 | 75.62 | 72.15 | 74.43 | 69.36 |

[Table 4]

| | | Working Example 13 | Working Example 14 | Working Example 15 | Working Example 16 |
|---|---|---|---|---|---|
| Mixture slurry | TCE | BTDA | BTDA | BTDA | BTDA |
| | DAm | 3,5-DABA | 3,5-DABA | 3,5-DABA | 3,5-DABA |
| Calcining conditions | | 1 hr @ 400 °C | 1 hr @ 300 °C | 10 hr @ 200 °C | 10 hr @ 200 °C |
| Film thickness ($\mu$m) | | 1 | 1 | 4 | 4 |
| Specific capacity (mAh/cm$^2$) | | 1.87 | 2.07 | 1.67 | 1.49 |
| Discharge capacity (mAh/g) | 1st cycle | 3870.7 | 4448.6 | 3736.7 | 4022.2 |
| | 2nd Cycle | 3391.8 | 3820.2 | 3195.2 | 3490.8 |
| | 10th Cycle | - | 3738.1 | 3083.1 | 3441.9 |
| | 30th Cycle | 2977.3 | 3448.6 | - | - |
| | 50th Cycle | 2524.6 | - | - | - |
| Maintenance factor (%) | 10th Cycle / 2nd Cycle | - | 97.85 | 96.49 | 98.60 |
| | 30th Cycle / 2nd Cycle | 87.78 | 90.28 | - | - |
| | 50th Cycle / 2nd Cycle | 74.43 | - | - | - |

[Table 5]

| | | Comparative Example 2 | Comparative Example 3 | Comparative Example 4 | Comparative Example 5 | Comparative Example 6 | Comparative Example 7 |
|---|---|---|---|---|---|---|---|
| Mixture slurry | TCE | BTDA | BTDA | BTDA | BTDA | BTDA | BTDA |
| | DAm | m-PDA | m-PDA | m-PDA | m-PDA | m-PDA | m-PDA |
| Calcining conditions | | 1 hr @ 300 °C | 1 hr @ 300 °C | 1 hr @ 300 °C | 4 hr @ 350 °C | 4 hr @ 350 °C | 4 hr @ 350 °C |
| Film thickness (μm) | | 20 | 35 | 27 | 37 | 28 | 31 |
| Specific capacity (mAh/cm$^2$) | | 6.31 | 10.13 | 7.27 | 9.50 | 6.74 | 8.86 |
| Discharge capacity (mAh/g) | 1$^{st}$ cycle | 3654.3 | 3533.4 | 3410.2 | 3780.1 | 3724.5 | 3431.7 |
| | 2$^{nd}$ Cycle | 2857.9 | 2661.4 | 2757.5 | 2709.1 | 2911.2 | 2629.7 |
| | 30$^{th}$ Cycle | 1645.6 | 1453.3 | 1207.2 | 1202.9 | 1860.4 | 1036.1 |
| | 50$^{th}$ Cycle | 1224.9 | 1067.3 | 762.8 | 825.3 | 1410.8 | 746.9 |
| Maintenance factor (%) | 30$^{th}$ Cycle / 2$^{nd}$ Cycle | 57.58 | 54.61 | 43.78 | 44.40 | 63.91 | 39.40 |
| | 50$^{th}$ Cycle / 2$^{nd}$ Cycle | 42.86 | 40.10 | 27.66 | 30.46 | 48.46 | 28.40 |

From the above results, the monomeric polyimide precursor solution relating to the present invention clearly can more strongly bind the active substance particles to the current collector body, and by extension, along with being able to further improve the charging/discharging cycle in a lithium ion secondary battery, can increase the discharge capacity of a lithium ion secondary battery.

INDUSTRIAL APPLICABILITY

Since the polyimide precursor solution and polyimide precursor relating to the present invention can be used to bind together active substance particles and a current collector body more strongly than a conventional polyimide precursor solution and polyimide precursor, they are a useful binder for the active substance layer on the anode of a lithium ion secondary battery.

In addition, along with further improving the charging/discharging cycle of a lithium ion secondary battery compared to a convention mixture slurry, since the mixture slurry relating to the present invention can increase the discharge capacity of a lithium ion secondary battery or the like, it is useful as an anode mixture slurry for forming an anode active substance layer in nonaqueous secondary batteries such as lithium ion secondary batteries or the like.

Furthermore, since the polyimide precursor solution and polyimide precursor relating to the present invention are expected to exhibit good adhesion not only for active substance particles and current collector bodies but also toward other adherends, they can also be considered as heat-resistant adhesive agents.

## Claims

**1.** Monomeric polyimide precursor solution comprising:

a tetracarboxylic acid ester compound,
a diamine compound having anionic groups,
and a solvent that dissolves the tetracarboxylic acid ester compound and diamine compound.

**2.** The monomeric polyimide precursor solution as recited in Claim 1,
wherein the anionic groups are carboxyl groups.

**3.** The monomeric polyimide precursor solution as recited in Claim 2,
wherein the diamine compound is 3,4-diaminobenzoic acid or 3,5-diaminobenzoic acid.

**4.** The monomeric polyimide precursor solution as recited in any one of Claims 1 through 3,
wherein the tetracarboxylic acid ester compound is
3,3',4,4'-benzophenonetetracarboxylic acid ester.

**5.** Monomeric polyimide precursor comprising:

a tetracarboxylic acid ester compound,
and a diamine compound having anionic groups.

**6.** The polyimide resin obtained by heating the monomeric polyimide precursor solution as recited in any one of Claims 1 through 4 or the monomeric polyimide precursor as recited in Claim 5.

**7.** The polyimide resin as recited in Claim 6,
wherein the glass transition temperature is 300 °C or higher.

**8.** The polyimide resin as recited in Claim 6 or 7,
wherein the molecular weight between crosslinks is 30 or less.

**9.** Mixture slurry for producing battery electrode comprising:

the monomeric polyimide precursor solution as recited in any one of Claims 1 through 4,
and active substance particles.

**10.** Battery electrode comprising:

a current collector body,
and an active substance layer obtained from the mixture slurry as recited in Claim 9 and being on the current collector body.

**11.** Battery electrode comprising
a current collector body,
and an active substance layer having active substance particles and a polyimide resin that along with mutually binding together the active substance particles also binds together the current collector body and the active substance particles, the active substance layer being on the current collector body, the polyimide resin having anionic groups and its structure being porous.

**12.** Method for producing a mixture slurry comprising:

a first mixing step for preparing a monomeric polyimide precursor solution with carbon black by mixing carbon black into a monomeric polyimide precursor solution containing a tetracarboxylic acid ester compound, a diamine compound having anionic groups, and a solvent that dissolves the tetracarboxylic acid ester compound and diamine compound, so as not to apply the shear stress substantially,
and a second mixing step for mixing active substance particles with the monomeric polyimide precursor solution with carbon black to prepare a mixture slurry.

**13.** Battery electrode formation method comprising:

a coating step for coating the mixture slurry as recited in Claim 9 onto a current collector body to form a mixture slurry coating on the current collector body,
and a heating step for heating the mixture slurry coating to form a porous active substance layer.

**14.** The battery electrode formation method as recited in Claim 13,
wherein in the heating step, the mixture slurry coating is heated to a temperature of 100 °C or higher and less than 400 °C.

**15.** A binder composition for battery electrode comprising:

a tetracarboxylic acid ester compound as a monomer,
a diamine compound having anionic groups as a monomer,
and a solvent that dissolves the tetracarboxylic acid ester compound and diamine compound.

**Patentansprüche**

**1.** Monomere Polyimid-Präkursorlösung, welche aufweist:

eine Tetracarbonsäureester-Verbindung,
eine Diaminverbindung, welche anionische Gruppen aufweist, und
ein Lösungsmittel, in welchem die Tetracarbonsäureester-Verbindung und die Diaminverbindung gelöst sind.

**2.** Monomere Polyimid-Präkursorlösung gemäß Anspruch 1,
wobei die anionischen Gruppen Carboxygruppen sind.

**3.** Monomere Polyimid-Präkursorlösung gemäß Anspruch 2,
wobei die Diaminverbindung 3,4-Diaminobenzoesäure oder 3,5-Diaminobenzoesäure ist.

**4.** Monomere Polyimid-Präkursorlösung gemäß einem der Ansprüche 1 bis 3,
wobei die Tetracarbonsäureester-Verbindung ein 3, 3’, 4, 4’-Benzophenonetetracarbonsäureester ist.

**5.** Monomerer Polyimid-Präkursor, welcher aufweist:

eine Tetracarbonsäureester-Verbindung und
eine Diaminverbindung, welche anionische Gruppen aufweist.

**6.** Polyimidkunststoff, der durch Erhitzen der monomeren Polyimid-Präkursorlösung gemäß einem der Ansprüche 1 bis 4 oder des monomeren Polyimid-Präkursors gemäß Anspruch 5 erlangt wird.

**7.** Polyimidkunststoff gemäß Anspruch 6,
wobei die Glasübergangstemperatur 300°C oder höher ist.

**8.** Polyimidkunststoff gemäß Anspruch 6 oder 7,
wobei das molekulare Gewicht zwischen den Querverbindungen 30 oder weniger ist.

**9.** Mischungssuspension zum Herstellen einer Batterieelektrode aufweisend:

die monomere Polyimid-Präkursorlösung gemäß einem der Ansprüche 1 bis 4, und
Partikel einer aktiven Substanz.

**10.** Batterieelektrode, welche aufweist:

einen Stromkollektorhauptteil und eine Schicht einer aktiven Substanz, die aus der Mischungssuspension gemäß Anspruch 9 erlangt ist und die auf dem Strom-kollektorhauptteil ist.

**11.** Batterieelektrode, welche aufweist:

einen Stromkollektorhauptteil und
eine Schicht einer aktiven Substanz, welche Partikel einer aktiven Substanz und einen Polyimidkunststoff aufweist, der zusammen mit dem gegenseitigen Aneinanderbinden der Partikel der aktiven Substanz auch den Stromkollektorhauptteil und die Partikel der aktiven Substanz aneinander bindet, wobei die Schicht der aktiven Substanz auf dem Stromkollektorhauptteil ist, wobei der Polyimidkunststoff anionische Gruppen aufweist und seine Struktur porös ist.

**12.** Verfahren zum Herstellen einer Mischungssuspension aufweisend:

einen ersten Mischungsschritt zum Herstellen einer monomeren Polyimid-Präkursorlösung mit Ruß durch Mischen des Rußes in eine monomere Polyimid-Präkursorlösung, welche eine Tetracarbonsäureester-Verbindung, eine Diaminverbindung, welche anionische Gruppen aufweist, und ein Lösungsmittel enthält, in welchem die Tetracarbonsäureester-Verbindung und die Diaminverbindung gelöst sind, und zwar im Wesentlichen ohne Scherspannung anzulegen, und
einen zweiten Mischungsschritt zum Mischen der Partikel der aktiven Substanz mit der monomeren Polyimid-Präkursorlösung mit Ruß, um eine Mischungssuspension herzustellen.

**13.** Batterieelektroden-Herstellungsverfahren, welches aufweist:

einen Beschichtungsschritt zum Beschichten der Mischungssuspension gemäß Anspruch 9 auf einen Stromkollektorhauptteil, um eine Mischungssuspensionsbeschichtung auf dem Stromkollektorhauptteil zu bilden, und
einen Heizschritt zum Heizen der Mischungssuspensionsbeschichtung, um eine poröse Schicht einer aktiven Substanz zu bilden.

**14.** Batterieelektroden-Herstellungsverfahren gemäß Anspruch 13, wobei in dem Heizschritt die Mischungssuspensionsbeschichtung auf eine Temperatur von 100°C oder höher und weniger als 400°C geheizt wird.

**15.** Binderzusammensetzung für eine Batterieelektrode aufweisend:

eine Tetracarbonsäureester-Verbindung als ein Monomer,
eine Diaminverbindung, welche anionische Gruppen aufweist, als ein Monomer, und
ein Lösungsmittel, in welchem die Tetracarbonsäureester-Verbindung und die Diaminverbindung gelöst sind.

**Revendications**

**1.** Solution de précurseur de polyimide monomère comprenant :

un composé ester d'acide tétracarboxylique,
un composé diamine ayant des groupes anioniques,
et un solvant qui dissout le composé ester d'acide tétracarboxylique et le composé diamine.

**2.** Solution de précurseur de polyimide monomère selon la revendication 1,
dans laquelle les groupes anioniques sont des groupes carboxyle.

**3.** Solution de précurseur de polyimide monomère selon la revendication 2,
dans laquelle le composé diamine est l'acide 3,4-diaminobenzoïque ou l'acide 3,5-diaminobenzoïque.

**4.** Solution de précurseur de polyimide monomère selon l'une quelconque des revendications 1 à 3,
dans laquelle le composé ester d'acide tétracarboxylique est l'ester d'acide 3,3',4,4'-benzophénonetétracarboxylique.

**5.** Précurseur de polyimide monomère comprenant :

un composé ester d'acide tétracarboxylique
et un composé diamine ayant des groupes anioniques.

**6.** Résine polyimide obtenue en chauffant la solution de précurseur de polyimide monomère selon l'une quelconque des revendications 1 à 4 ou le précurseur de polyimide monomère selon la revendication 5.

**7.** Résine polyimide selon la revendication 6,
dans laquelle la température de transition vitreuse est de 300 °C ou plus.

**8.** Résine polyimide selon la revendication 6 ou 7,
dans laquelle le poids moléculaire entre les réticulations est de 30 ou moins.

**9.** Suspension épaisse mixte pour produire une électrode de batterie comprenant :

la solution de précurseur de polyimide monomère selon l'une quelconque des revendications 1 à 4,
et des particules de substance active.

**10.** Électrode de batterie comprenant :

un corps de collecte de courant,
et une couche de substance active obtenue à partir de la suspension épaisse mixte selon la revendication 9 et se trouvant sur le corps de collecte de courant.

**11.** Électrode de batterie comprenant :

un corps de collecte de courant,
et une couche de substance active ayant des particules de substance active et une résine polyimide qui avec la liaison mutuelle des particules de substance active lie aussi ensemble le corps de collecte de courant et les particules de substance active, la couche de substance active se trouvant sur le corps de collecte de courant, la résine polyimide ayant des groupes anioniques et sa structure étant poreuse.

**12.** Procédé de production d'une suspension épaisse mixte comprenant :

une première étape de mélange pour préparer une solution de précurseur de polyimide monomère avec du noir de charbon en mélangeant le noir de charbon dans une solution de précurseur de polyimide monomère contenant un composé ester d'acide tétracarboxylique, un composé diamine ayant des groupes anioniques et un solvant qui dissout le composé ester d'acide tétracarboxylique et le composé diamine, de manière à ne pas appliquer la contrainte de cisaillement substantiellement,
et une seconde étape de mélange pour mélanger les particules de substance active avec la solution de précurseur de polyimide monomère avec du noir de charbon pour préparer une suspension épaisse mixte.

**13.** Procédé de formation d'électrode de batterie comprenant :

une étape de revêtement pour revêtir la suspension épaisse mixte selon la revendication 9 sur un corps de collecte de courant pour former un revêtement de suspension épaisse mixte sur le corps de collecte de courant, et une étape de chauffage pour chauffer le revêtement de suspension épaisse mixte pour former une couche de substance active poreuse.

**14.** Procédé de formation de batterie d'électrode selon la revendication 13,
dans lequel dans l'étape de chauffage, le revêtement de suspension épaisse mixte est chauffé à une température de 100 °C ou plus et à moins de 400 °C.

**15.** Composition de liant pour électrode de batterie comprenant :

un composé ester d'acide tétracarboxylique comme monomère,
un composé diamine ayant de groupes anioniques comme monomère,
et un solvant qui dissout le composé ester d'acide tétracarboxylique et le composé diamine.

Figure 1

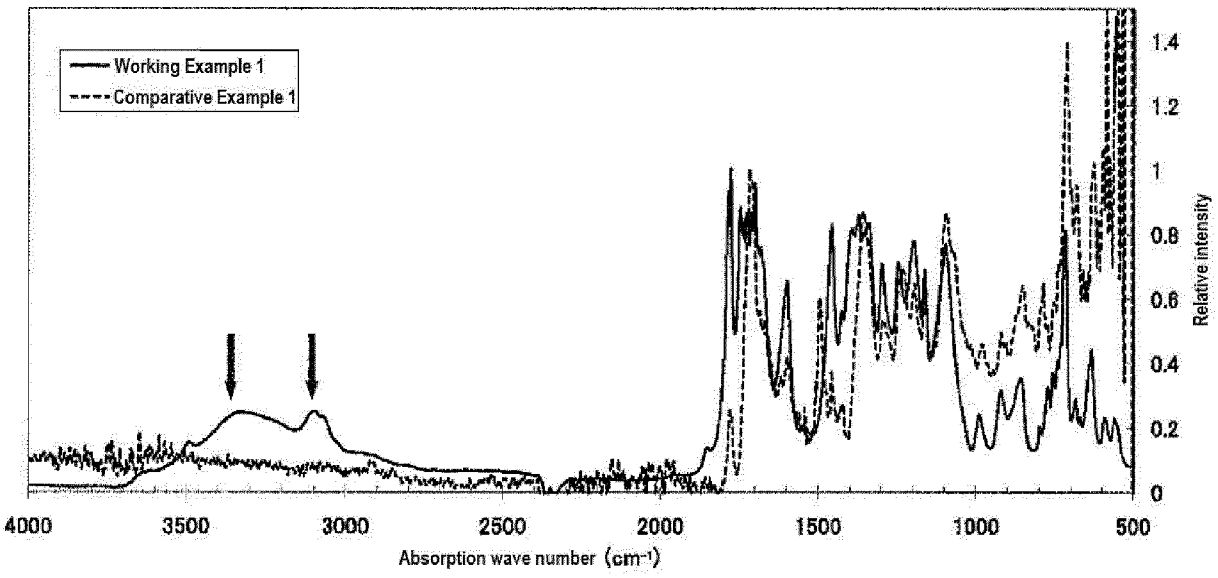


Figure 2

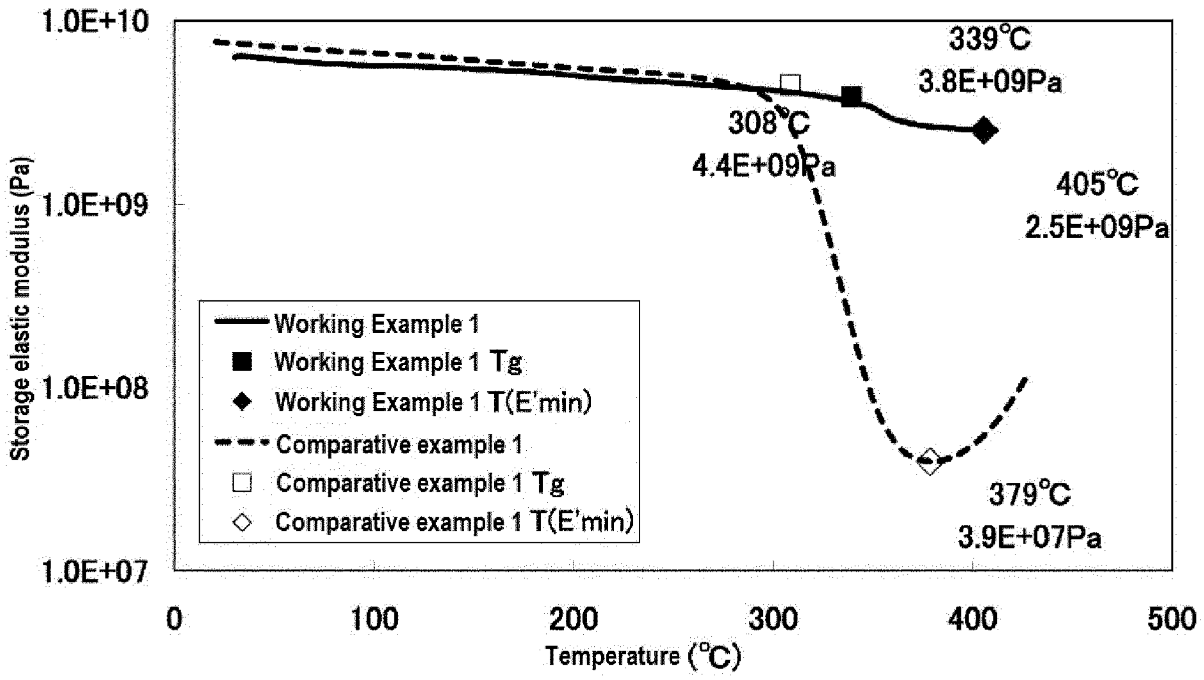

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008034352 A
- JP 59204609 A


### Non-patent literature cited in the description


- *Journal of Applied Polymer Science,* vol. 110, 1216-1224
- *Solid State Ionics,* vol. 67, 165-169
- *Journal of photopolymer science and technology,* vol. 16, 279-284
- *Journal of photopolymer science and technology,* vol. 17, 269-280